# EUROPÄISCHE PATENTANMELDUNG

(11) **EP 4 768 447 A1**
(43) Veröffentlichungstag der Anmeldung: **01.07.2026**
(21) Anmeldenummer: 24223594.3
(22) Anmeldetag: 30.12.2024
(51) Int. Cl.: C02F 1/461, C25B 11/02, C25B 11/037, C25B 11/052, C25B 11/081

(54) **ELEKTRODE MIT IN EINE KUNSTSTOFFMATRIX EINGEBETTETEN UND TEILWEISE FREILIEGENDEN MISCHMETALLOXIDPARTIKELN SOWIE VERFAHREN ZU DEREN HERSTELLUNG**

(71) Anmelder: Whitecell Eisenhuth GmbH & Co. KG, 37520 Osterode (DE); Technische Universität Clausthal, 38678 Clausthal-Zellerfeld (DE)
(72) Erfinder: KUNZ, Ulrich, 37520 Osterode (DE); MONTEIRO, Joao Marcos, 85353 Freising (DE); HICKMANN, Thorsten, 37520 Osterode (DE)
(74) Vertreter: REHBERG HÜPPE + PARTNER

(57) **Zusammenfassung**

Eine Elektrode weist einen Formkörper (24) auf, der eine durch elektrisch leitfähige Zuschläge elektrisch leitfähig gemachte Kunststoffmatrix (25) und zumindest an einer Matrixoberfläche der Kunststoffmatrix (25) in die Kunststoffmatrix (25) eingebettete und teilweise freiliegende Mischmetalloxidpartikel (11) umfasst. Die Mischmetalloxidpartikel (11) weisen jeweils einen Titankern (2) mit einer Kernoberfläche und eine Edelmetalloxidbeschichtung auf der Kernoberfläche des Titankerns (2) auf. Die Titankerne (2) der Mischmetalloxidpartikel (11) weisen Teilchengrößen im Bereich von 1 µm bis 2500 µm auf. Die Edelmetalloxidbeschichtungen sind in die Kernoberflächen der Titankerne (2) eingebrannt und elektrisch leitend an die Titankerne (2) angebunden.

## Beschreibung

### TECHNISCHES GEBIET DER ERFINDUNG

Die Erfindung bezieht sich auf eine Elektrode mit einem Formkörper, der eine durch elektrisch leitfähige Zuschläge elektrisch leitfähig gemachte Kunststoffmatrix und zumindest an einer Matrixoberfläche der Kunststoffmatrix in die Kunststoffmatrix eingebettete und teilweise freiliegende Mischmetalloxidpartikel aufweist, wobei die Mischmetalloxidpartikel jeweils einen Titankern mit einer Kernoberfläche und eine Edelmetalloxidbeschichtung auf der Kernoberfläche des Titankerns aufweisen, wobei die Titankerne der Mischmetalloxidpartikel Teilchengrößen im Bereich von 1 µm bis 2500 µm aufweisen. Weiterhin bezieht sich die Erfindung auf ein Verfahren zur Herstellung einer solchen Elektrode.

Die Erfindung fällt auf das Gebiet der sogenannten Mischmetalloxidelektroden (mixed metal oxide (MMO) electrodes), die auch als dimensionsstabile Anoden (dimensionally stable anodes (DSA)) bezeichnet werden.

### STAND DER TECHNIK

Aus der WO 2019/202161 A2 ist ein elektrochemischer Fällungsreaktor mit einer Flächenelektrode bekannt. Die Flächenelektrode weist eine Kunststoffmatrix mit eingebetteten elektrisch leitfähigen Partikeln auf. Die Kunststoffmatrix kann auf einem thermoplastischen Elastomer (TPE) basieren. Das thermoplastische Elastomer kann aus einer Gruppe ausgewählt sein, die PP/EPDM, Styrol-Blockcopolymere (TPE-S), die SBS, SEBS, SEPS, SEEPS und MBS umfasst. Mit den eingebetteten elektrisch leitfähigen Partikeln werden elektrische Widerstände der Flächenelektrode eingestellt. Bei den Partikeln kann es sich um Ruß- oder Graphitpartikel oder andere nicht ausgeformte Partikel auf Kohlenstoffbasis sowie um Kohlenstoffnanoröhrchen (Carbon Nano Tubes = CNTs) handeln, deren Partikelgröße 2.000 µm, vorzugsweise 1.500 µm und an meisten bevorzugt 1.000 µm nicht überschreitet. Relativ kleine Partikel sind leichter homogen in der Kunststoffmatrix zu verteilen, ohne dass sie deren mechanische Eigenschaft kompromittieren. Bei den in die Kunststoffmatrix eingebetteten elektrisch leitfähigen Partikeln kann es sich weiterhin um Fasern auf der Basis von Kohlenstoff, insbesondere reine Kohlenstofffasern, handeln. Zusätzlich können Katalysatorpartikel in die Kunststoffmatrix eingebettet und/oder dort, wo die Flächenelektrode mit der in dem Fällungsreaktor zu behandelnden Flüssigkeit in Kontakt gelangt, auf der Oberfläche der Flächenelektrode angeordnet sein. Unter Katalysatorpartikeln sind insbesondere Partikel eines elektrochemisch aktiven Katalysators zu verstehen, der erwünschte elektrochemische Reaktionen an der Elektrode begünstigt, beispielsweise ein Sauerstoff reduzierender Katalysator zur Vermeidung von Wasserstoffbildung an der Kathode.

Aus der WO 2023/274912 A1 ist eine Bipolarplatte zur chemischen Abgrenzung und elektrischen Reihenschaltung aufeinander gestapelter PEM-Bremsstoffzellen oder PEM-Elektrolyseure bekannt. Die Bipolarplatte weist eine gasundurchlässige Sperrschicht, eine Flächenelektrode in einem zentralen Bereich auf einer ersten Seite der Sperrschicht und eine elektrische Verbindung zwischen der ersten Flächenelektrode auf der ersten Seite und einer gegenüberliegenden zweiten Seite der Sperrschicht auf. Die Flächenelektrode ist offen porös und weist eine Elektrodenmatrix aus Kunststoff auf, wobei eine elektrische Leitfähigkeit der Flächenelektrode auf in die Elektrodenmatrix eingebetteten Metallpartikeln basiert. Die Metallpartikel der Flächenelektrode liegen teilweise an der Oberfläche der Flächenelektrode frei. Die Metallpartikel, die in die erste Elektrodenmatrix eingebettet sind, bestehen im Wesentlichen aus Titan. Die Metallpartikel können mit Platin und/oder Ruthenium und/oder einem Titanmischoxid und/oder einem Titannitrit beschichtet sein. Das Titanmischoxid kann zum Beispiel iridiumhaltig sein. Jede Beschichtung kann durch Physical Vapor Deposition (PVD), das heißt physikalische Ablagerung aus der Dampfphase ausgebildet sein. Die in die Elektrodenmatrix eingebetteten Metallpartikeln können Teilchengrößen in einem Bereich von 10 µm bis 500 µm aufweisen. Als günstiger Kunststoff für die Sperrschicht und die Elektrodenmatrix ist Polyvinylidenfluorid (PVDF) angegeben.

Titan bildet an Luft spontan eine oxidische Passivierungsschicht aus, die es gegen viele Medien schützt. Aufgrund der hohen Reaktivität von Titan mit vielen Medien bei erhöhten Temperaturen oder erhöhtem Druck, wenn die Passivierungsschicht diesen Bedingungen nicht standhält, kann die Reaktionsgeschwindigkeit bis zur Explosion anwachsen. In Pulverform ist Titan pyrophor, also selbstentzündlich. Je nach Teilchengröße entzündet sich Titanpulver an Luftsauerstoff bei Temperaturen zwischen 250 °C und 400 °C. Massives Titan entzündet sich hingegen aufgrund seiner kleineren relativen Oberfläche erst bei Temperaturen oberhalb 700 °C.

Aus S. S. Kim et al.: Application of PVD coatings for developing a DSA-type anode, ScienceDirect, Thin Solid Films 516 (2008), 3673-3679 beschreiben neben dem Aufbringen von Iridiumoxidschichten auf zuvor angeätzte Titanplatten durch Magnetronsputtern die übliche Ausbildung einer dimensionsstabilen Anode (DSA) durch Aufbringen einer Chlorsalzlösung auf das angeätzte Titan, anschließendes Verdampfen des Lösungsmittels bei niedriger Temperatur von 50 °C bis 100 °C, Wärmebehandlung bei 250 °C bis 300 °C, wobei die Schritte vom Aufbringen de Chlorsalzlösung bis zur Wärmebehandlung wiederholt werden, und nachfolgende pyrolytische Ausbildung einer Iridiumoxidschicht auf dem Titan bei 500 °C bis 550 °C.

Aus der EP 4 050 686 A2 ist ein Verfahren zur kontinuierlichen Herstellung von Bipolarplatten aus mit elektrisch leitfähigen Partikeln versetztem Kunststoff bekannt. Die Partikel und der Kunststoff werden zu einem Compound compoundiert, wobei ein Anteil der Partikel an dem Compound zwischen 75 und 90 Gewichtsprozent beträgt. Das Compound wird kryogen zu einem Pulver vermahlen. Das Pulver wird zu einer Vorform gestreut, und die Vorform wird zwischen einem Unterband und einem Oberband einer Doppelwandpresse heiß zu einem bandförmigen Plattenmaterial verpresst. Das bandförmige Plattenmaterial wird in die Bipolarplatten oder Rohlinge für die Bipolarplatten aufgeteilt. Bei den elektrisch leitfähigen Partikeln kann es sich um solche auf Kohlenstoffbasis, konkret um Rußpartikel und/oder Graphitpartikel und/oder Kohlenstoffnanoröhrchen, handeln. Aber auch andere elektrisch leitfähige Füllstoffe können Verwendung finden. Der Kunststoff kann zumindest überwiegend aus Polyethylen (PE) oder Polypropylen (PP) bestehen. Auch Polyphenylensulfid (PPS) und Polyvinylidenfluorid (PVDF) können eingesetzt werden. Beim kryogenen Vermahlen des Compounds wird eine Partikelgröße D90 von kleiner 100 µm erreicht, das heißt mindestens 90 Gewichtsprozent der Teilchen des Pulvers weisen eine Partikelgröße kleiner 100 µm auf.

### AUFGABE DER ERFINDUNG

Der Erfindung liegt die Aufgabe zugrunde, eine Elektrode aufzuzeigen, die als vollwertige Mischmetalloxidelektrode oder dimensionsstabile Anode einsetzbar ist, aber deutlich kostengünstiger herstellbar ist als bekannte Elektroden.

### LÖSUNG

Die Aufgabe der Erfindung wird durch eine Elektrode mit den Merkmalen des unabhängigen Patentanspruchs 1 und durch ein Verfahren zu Ihrer Herstellung mit den Merkmalen des Patentanspruchs 11 gelöst. Bevorzugte Ausführungsformen der Elektrode und des Verfahrens sind in den abhängigen Patentansprüchen definiert.

### BESCHREIBUNG DER ERFINDUNG

Eine erfindungsgemäße Elektrode umfasst einen Formkörper, der eine durch elektrisch leitfähige Zuschläge elektrisch leitfähig gemachte Kunststoffmatrix und zumindest an einer Matrixoberfläche der Kunststoffmatrix in die Kunststoffmatrix eingebettete und teilweise freiliegende Mischmetalloxidpartikel aufweist. Die Mischmetalloxidpartikel weisen jeweils einen Titankern mit einer Kernoberfläche und eine Edelmetalloxidbeschichtung auf der Kernoberfläche des Titankerns auf. Die Titankerne der Mischmetalloxidpartikel weisen Teilchengrößen im Bereich von 1 µm bis 2500 µm auf. Die Edelmetalloxidbeschichtungen sind in die Kernoberflächen der Titankerne eingebrannt und elektrisch leitend an die Titankerne angebunden.

Durch die kleinen Teilchengrößen im Bereich von 1 µm bis 2500 µm sind die relativen Kernoberflächen der Titankerne so groß, dass bereits bei Raumtemperatur die Gefahr einer Selbstentzündung besteht, wenn die Kernoberflächen von Passivierungsschichten aus Titanoxid befreit sind, um die Edelmetalloxidbeschichtungen aufzubringen. Das Entfernen der Passivierungsschichten ist aber erforderlich, um die Edelmetalloxidbeschichtungen elektrisch leitend an die Titankerne anzubinden. Der Fachmann hätte daher insbesondere davon Abstand genommen, die Edelmetalloxidbeschichtungen in die Kernoberflächen der Titankerne einzubrennen, d. h. unter Anwendung einer gegenüber Raumtemperatur stark erhöhten Temperatur. Überraschender Weise, lassen sich jedoch auch kleine Titankerne risikolos nach einem Verfahren mit Edelmetalloxidbeschichtungen versehen, das dem bekannten Beschichten von massiven Elektrodenkernen aus Titan ähnlich oder sogar gleich ist und bei dem Edelmetalloxidbeschichtungen pyrolytisch, d. h. unter thermischer Umwandlung in Anwesenheit von Sauerstoff, aus Vorläufersalzen ausgebildet werden. Es reicht aus, bei der Führung des Verfahrens darauf zu achten, die Gefahr einer Selbstentzündung der kleinen Titankerne zu vermeiden. Sobald die Edelmetalloxidbeschichtung auf die Titankerne aufgebracht ist, besteht diese Gefahr nicht mehr.

Pyrolytisch auf Titankerne aufgebrachte Edelmetalloxidbeschichtungen zeichnen sich durch eine große relative Oberfläche und damit durch eine hohe relative katalytische Wirkung aus.

Bei der erfindungsgemäßen Elektrode sind die Edelmetalloxidbeschichtungen elektrisch leitend an die metallischen Titankerne angebunden. Die Edelmetalloxidbeschichtungen weisen zwar ihrerseits häufig eine höhere elektrische Leitfähigkeit auf als Titan. Wenn die Edelmetallbeschichtungen insbesondere aus Kostengründen vergleichsweise dünn ausgebildet werden, stellt ihre elektrisch leitende Anbindung an die Titankerne auch dann noch eine hohe elektrische Leitfähig sicher, wenn die Beschichtungen bei der Verwendung der erfindungsgemäßen Elektrode porös oder rissig geworden sind. Die elektrisch leitende Anbindung der Edelmetalloxidbeschichtungen an die metallischen Titankerne ist daher wichtig für die Lebensdauer der erfindungsgemäßen Elektrode.

Aus diesen Gründen sind die Kernoberflächen der Titankerne der erfindungsgemäßen Elektrode unterhalb der Edelmetalloxidbeschichtungen vorzugsweise von Passivierungsschichten aus Titanoxid frei. Dies kann insbesondere durch Anätzen dieser Kernoberflächen vor dem Aufbringen der Edelmetalloxidbeschichtungen erreicht werden. Die von Passivierungsschichten freien Kernoberflächen der Titankerne erlauben es, die Edelmetalloxidbeschichtungen in die Kernoberflächen der Titankerne dauerhaft so einzubrennen, dass die Edelmetalloxidbeschichtungen die Kernoberflächen der Titankerne als undurchdringbarer Schutzmantel umgeben. Es versteht sich dabei, dass die Edelmetalloxidbeschichtungen die Kernoberflächen der Titankerne vorzugsweise vollständig bedecken, um diese vollständig zu schützen und vollständig mit den vorteilhaften elektrochemischen Eigenschaften zu versehen.

Die Edelmetalloxidbeschichtungen weisen typischerweise Rutheniumoxid und/oder Iridiumoxid auf. Von Rutheniumoxid und Iridiumoxid ist bekannt, dass sie in höchstem Maße beständig gegenüber aggressiven elektrochemischen Umgebungen sind, und dass sie wertvolle elektrokatalytische Eigenschaften in Bezug auf elektrochemische Reaktionen aufweisen. Unter anderem wegen der häufigen wechselseitigen Verunreinigungen kann ein Mischoxid aus Rutheniumoxid und Iridiumoxid kostengünstiger sein kann als nur Rutheniumoxid oder Iridiumoxid. Zudem weist ein Mischoxid aus Rutheniumoxid und Iridiumoxid eine besonders hohe elektrochemische Stabilität auf und zeigen die elektrokatalytischen Eigenschaften von Rutheniumoxid und Iridiumoxid Synergien. Konkret können die Edelmetalloxidbeschichtungen bezogen auf ihr Gewicht zu mindestens 90 % und vorzugsweise zu mindestens 96 % aus Rutheniumoxid und Iridiumoxid bestehen und/oder Rutheniumoxid und Iridiumoxid in einem Verhältnis von 10:90 bis 90:10 und vorzugsweise in einem Verhältnis von 55:45 bis 65:35 aufweisen. Bei dem Verhältnis von 60 : 40 weisen die elektrokatalytischen Eigenschaften von Rutheniumoxid und Iridiumoxid ein Maximum aufweisen. Bei diesem Verhältnis von Rutheniumoxid und Iridiumoxid ergibt sich eine besonders dauerhafte und in verschiedenen elektrochemischen Reaktionen nutzbare große katalytische Wirkung der Metalloxidbeschichtungen. Wie bereits angesprochen zeichnen sich Rutheniumoxid und Iridiumoxid durch eine verglichen mit Titan und insbesondere Titanoxid hohe elektrische Leitfähigkeit aus. Bei der erfindungsgemäßen Elektrode wird von allen diesen Vorteilen Gebrauch gemacht. Dabei ergeben sich diese Vorteile bereits bei kleinen Dicken oder Oberflächendichten der Metalloxidbeschichtungen.

Grundsätzlich können die Oberflächendichten in einem Bereich von 1 g/m² bis 150 g/m² liegen. Vorzugsweise liegt sie in einem Bereich von 5 g/m² bis 20 g/m², das heißt bei etwa 10 g/m², und damit signifikant unterhalb des Bereichs von 40 g/m² bis 120 g/m², der für Oberflächendichten von Edelmetalloxidbeschichtungen auf massiven Titanelektroden als üblich anzusehen ist. Hierdurch ergeben sich erhebliche Kostenvorteile.

Die Titankerne können konkret aus Titan Grade 1, 2 oder 3 bestehen. Anders gesagt ist die Verwendung von technischem Titan dieser Qualitäten ausreichend. Es muss kein chemisch reines Titan verwendet werden.

Vorzugsweise weisen die Titankerne der Mischmetalloxidpartikel eine mittlere Teilchengröße in einem Bereich von 300 µm bis 500 µm auf, und eine Teilchengrößenverteilung der Titankerne, wie sie durch Sieben einstellbar und/oder überprüfbar ist, ist nicht breiter als 300 µm. Die Titankerne weisen also vorzugsweise nicht stark unterschiedliche, sondern zumindest etwa gleiche kleine Teilchengrößen auf. Dabei können die Titankerne drei Haupterstreckungsrichtungen aufweisen, das heißt körnig oder zumindest in etwa kugelförmig ausgebildet sein. Alternativ können die Titankerne aber auch nur zwei Haupterstreckungsrichtungen aufweisen, das heißt plättchenförmig ausgebildet sein, oder nur eine Haupterstreckungsrichtung aufweisen, das heißt nadelförmig ausgebildet sein. Vorzugsweise sind die Titankerne jedoch körnig oder kugelförmig. Wenn die Titankerne nur eine oder zwei Haupterstreckungsrichtungen aufweisen, fallen ihre Teilchengrößen in diesen Haupterstreckungsrichtungen eher in den oberen Teil des voranstehend angegebenen Bereichs von 1 µm bis 2.500 µm.

Die Kunststoffmatrix der erfindungsgemäßen Elektrode besteht sinnvoller Weise aus einem säurebeständigen Polymer, ist also gegenüber den elektrochemischen Umgebungen, in denen die erfindungsgemäße Elektrode zum Einsatz kommen soll, inert. Dies kann je nach der Einsatzumgebung erreicht werden, indem die Kunststoffmatrix aus Polypropylen (PP), Polyvinylidenfluorid (PVDF), Polyphenylensulfid (PPS), Polysulfon (PSU), Polyfluoralkoxy-Polymeren (PFA), Polyetheretherketon (PEEK), Polyarylenether (PAE) und Polytetrafluorethylen (PTFE) ausgewählt wird. Besonders bevorzugt ist die Verwendung von Polysulfon (PSU), Polyetheretherketon (PEEK) und Polytetrafluorethylen (PTFE) für die Kunststoffmatrix, weil diese Polymere eine besonders hohe chemische Beständigkeit aufweisen.

Die vorgenannten Polymere sind thermoplastische Polymere. Alternativ kann die Kunststoffmatrix der erfindungsgemäßen Elektrode aus bekannten säurebeständigen duroplastischen Polymeren ausgebildet sein.

Bei der konkreten Auswahl des säurebeständigen Polymers sind dessen Material- und Verarbeitungskosten zu berücksichtigen. Die erfindungsgemäße Elektrode hat aufgrund der großen wirksamen Oberflächen der Mischmetalloxidpartikel bezogen auf die eingesetzte Menge an Titan, insbesondere wegen der kleinen Oberflächendichten der Edelmetalloxidbeschichtungen aber auch bezogen auf die eingesetzten Mengen an Ruthenium und Iridium ein hohes Kosteneinsparungspotential gegenüber anderen Mischmetalloxidelektroden und dimensionsstabilen Anoden.

Der Formkörper der erfindungsgemäßen Elektrode kann insbesondere ein flächiger Körper mit zwei Haupterstreckungsrichtungen und zwei Hauptseiten sein, wobei eine Monolage der Mischmetalloxidpartikel lokal an einer oder beiden Hauptseiten in die Matrixoberfläche der Kunststoffmatrix eingebettet ist und dabei an der Matrixoberfläche teilweise freiliegt. Eine Monolage der Mischmetalloxidpartikel ist so zu verstehen, dass die Mischmetalloxidpartikel in der Monolage dicht beieinander liegen, aber senkrecht zu der Haupterstreckungsebene der Monolage nicht übereinander liegen, so dass alle Mischmetalloxidpartikel der Monolage direkt in die Matrixoberfläche der Kunststoffmatrix eingebettet sind und zugleich an der Matrixoberfläche teilweise freiliegen. So sind alle bei der erfindungsgemäßen Elektrode vorhandenen Mischmetalloxidpartikel von außen zugänglich stehen damit beispielsweise als Katalysator für elektrochemische Reaktionen zur Verfügung.

Im Volumen der Kunststoffmatrix kann die elektrische Leitfähigkeit durch weitere elektrisch leitfähige Zuschläge bewirkt sein, insbesondere durch andere elektrisch leitfähige Zuschläge als die Mischmetalloxidpartikel, wobei die anderen elektrisch leitfähigen Zuschläge vorzugsweise aus Rußpartikeln, Graphitpartikeln, Kohlenstoffnanoröhrchen, Kohlenstofffasern, Metallpartikeln und Metallfasern ausgewählt sind.

Bei einem erfindungsgemäßen Verfahren zur Herstellung einer erfindungsgemäßen Elektrode werden Titankerne mit Teilchengrößen von 1 µm bis 2.500 µm mit einer Salzlösung benetzt, die Rutheniumsalz und/oder Iridiumsalz enthält. Die benetzten Titankerne werden getrocknet. Dann wird das Rutheniumsalz und/oder Iridiumsalz der getrockneten Titankerne thermisch zersetzt, und in Gegenwart von Sauerstoff wird Rutheniumoxid und/oder Iridiumoxid gebildet. So werden mit Edelmetalloxidbeschichtungen beschichtete Mischmetalloxidpartikel erhalten.

Aus einem säurebeständigen Polymer wird ein Formkörper mit einer durch elektrisch leitfähige Zuschläge elektrisch leitfähig gemachten Kunststoffmatrix geformt. Dabei werden die Mischmetalloxidpartikel zumindest in eine Matrixoberfläche der Kunststoffmatrix so eingebettet, dass sie an der Matrixoberfläche der Kunststoffmatrix teilweise freiliegen.

Das säurebeständige Polymer und die Zuschläge, die die elektrische Leitfähigkeit im Volumen der Kunststoffmatrix bewirken, können compoundiert werden, um ein Compound zu erhalten. Das Compound kann direkt in einen Formkörper der erfindungsgemäßen Elektrode geformt werden, oder zunächst in eine Vorform des Formkörpers. Das Formen geschieht typischerweise in einer Form, in die das Compound eingebracht wird und in der das Compound einem erhöhten Druck und einer erhöhten Temperatur ausgesetzt wird, um das Compound zu verdichten und den Formkörper oder dessen Vorform auszuformen. Konkret kann das Compoundieren und anschließende Herstellen des Formkörpers oder dessen Vorform so erfolgen, wie dies in der EP 4 050 686 A2 beschrieben ist.

Wenn zunächst eine Vorform des Formkörper mit der Kunststoffmatrix aus dem säurebeständigen Polymer und mit in die Kunststoffmatrix eingebetteten anderen elektrisch leitfähigen Zuschlägen geformt wird, können die Mischmetalloxidpartikel auf die zumindest eine Matrixoberfläche der Kunststoffmatrix aufgebracht werden und kann dann eine Monolage der Mischmetalloxidpartikel unter Anwendung von erhöhtem Druck und erhöhter Temperatur so in die zumindest eine Matrixoberfläche der Kunststoffmatrix eingebettet wird, dass sie an der Matrixoberfläche teilweise freiliegt. So wird maximaler Nutzen aus den eingesetzten Mischmetalloxidpartikel gezogen.

In der Regel müssen die Titankerne vor dem Benetzen mit der Salzlösung gereinigt werden. Vorzugsweise werden Sie zugleich von oxidischen Passivierungsschichten befreit. Dies kann dadurch geschehen, dass die Titankerne vor dem Benetzen mit einer Säure angeätzt werden, insbesondere mit einer mindestens 2 M HCl-Lösung bei mindestens Raumtemperatur. Vorzugsweise handelt es sich um eine 3 M HCl-Lösung, die zur Verfahrensbeschleunigung bis auf ihren Siedepunkt erwärmt werden kann. Vor dem Benetzen mit der Salzlösung werden die angeätzten Titankerne bei erhöhter Temperatur getrocknet. Dies geschieht vorzugsweise bei einer Temperatur von 90°C bis 110°C und ebenso bevorzugt in einem Ofen mit Zwangskonvektion, aber nicht notwendigerweise unter einer Schutzgasatmosphäre.

Die Salzlösung, mit der die gereinigten und getrockneten Titankerne benetzt werden, kann in Alkohol aufgelöste Salzhydrate aufweisen. Insbesondere kann es sich um in Isopropanol aufgelöste Chloridhydrate handeln, also um RuCl₃ * x H₂O und IrCl₃ * x H₂O, wobei x bei jedem Auftreten unabhängig von jedem anderen Auftreten etwa 5 sein kann.

Die mit der Salzlösung benetzten Titankerne werden zunächst getrocknet, um das Lösungsmittel der Salzlösung zu entfernen. Dies kann bei Temperaturen von 80°C bis 90°C und bevorzugt ebenfalls in einer sauerstofffreien Umgebung und in einem Ofen mit Zwangskonvektion sowie nicht notwendigerweise unter einer Schutzgasatmosphäre erfolgen.

Dann können bei deutlich höherer Temperatur von beispielsweise 420°C bis 480°C die Kristallwasseranteile der Salzhydrate entfernt werden. Das Benetzen, Trocknen und Kalzinieren, das heißt das Austreiben der Kristallwasser, können wiederholt werden, um die gewünschte Oberflächendichte der Edelmetalloxidbeschichtungen einzustellen.

Die eigentlichen Edelmetalloxidbeschichtungen werden anschließend ausgebildet, indem das dehydrierten Ruthenium- und/oder Iridiumsalz auf den Kernoberflächen der Titankerne bei typischerweise 520 °C bis 580 °C geglüht wird, um das Ruthenium und/oder Iridium aus den Salzhydratzen pyrolytisch in Rutheniumoxid und/oder Iridiumoxid umzuwandeln und die Edelmetalloxidbeschichtungen in die Kernoberflächen der Titankerne einzubrennen.

Das beschriebene erfindungsgemäße Verfahren hat sich als sicher gegenüber einer Selbstentzündung des Titans und insbesondere als explosionssicher erwiesen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Benetzen und Trocknen der benetzten Titankerne die Rede ist, ist dies so zu verstehen, dass die Titankerne genau einmal, zweimal oder mehrmals benetzt und anschließend getrocknet werden. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufdiagramm einer Herstellung von Mischmetalloxidpartikeln als Teil eines erfindungsgemäßen Verfahrens zur Herstellung einer erfindungsgemäßen Elektrode.
- **Fig. 2**: ist ein Ablaufdiagramm von weiteren Schritten des erfindungsgemäßen Verfahrens bis zum Herstellen eines als Elektrode einsetzbaren Formkörpers.
- **Fig. 3**: ist eine Fotografie eines Schnitts durch einen Formkörper, der nach dem Verfahren gemäß den Figuren 1 und 2 hergestellt wurde, vor schwarzem Hintergrund.
- **Fig. 4**: ist eine schematisierte Zeichnung des Schnitts gemäß den Figur 3, ebenfalls vor schwarzem Hintergrund.
- **Fig. 5**: ist eine mikroskopische Aufnahme eines bei der Herstellung von Mischmetalloxidpartikeln gemäß Fig. 1 mit RuO₂ und IrO₂ beschichteten Titankerns.
- **Fig. 6**: zeigt eine lineare Voltammetrie einer erfindungsgemäßen Elektrode im Vergleich zu derjenigen einer Platinelektrode.
- **Fig. 7**: zeigt eine lineare Voltammetrie einer weiteren erfindungsgemäßen Elektrode.
- **Fig. 8**: vergleicht Tafelsteigungen erfindungsgemäßer Elektroden mit derjenigen einer Platinelektrode; und
- **Fig. 9**: illustriert eine Simulation eines Abwasserbehandlungsverfahrens als Beispiel für eine Anwendung einer erfindungsgemäßen Elektrode.

### FIGURENBESCHREIBUNG

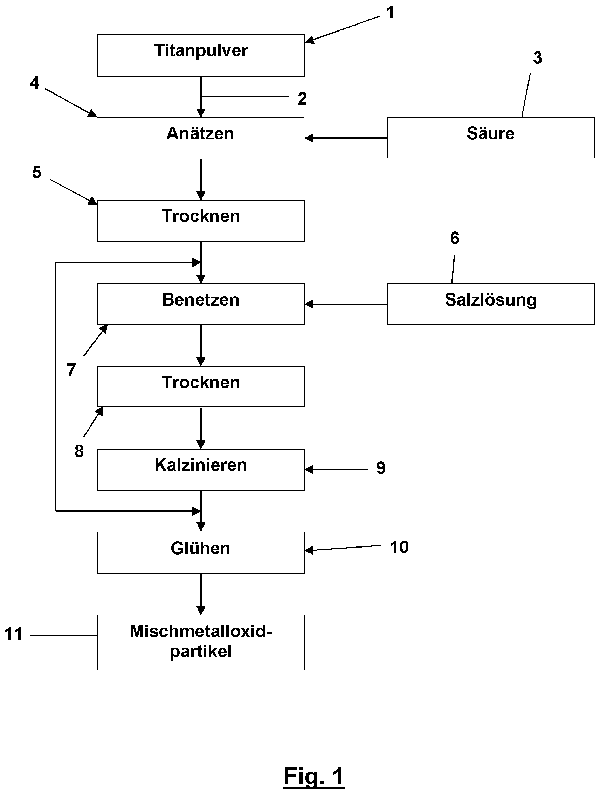

Die in den **Fig. 1** in Form eines Ablaufdiagramms dargestellten Schritte eines erfindungsgemäßes Verfahrens gehen von einem Titanpulver 1 aus, das aus Titankernen 2 mit Teilchengrößen zwischen 1 µm und 2.500 µm besteht. Das Titanpulver 1 kann als solches aus verschiedenen Quellen bezogen werden oder als Nebenprodukt bei der Herstellung von Werkstücken aus Titan anfallen, zum Beispiel durch Fräsen. Auch eine Gewinnung des Titanpulvers 1 durch Zerkleinern von Titan aus Abfällen ist möglich. Vorzugsweise weisen die Titankerne 2 eine schmale Teilchengrößenverteilung von idealerweise nicht breiter als 300 µm auf. Konkret können die Titankerne 2 eine mittlere Teilchengröße von 375 µm aufweisen und aus einer durch Sieben erhaltenen Pulverfraktion mit Teilchengrößen ≥ 250 µm und ≤ 500 µm stammen. Vorzugsweise sind die Titankerne 2 etwa kugelförmig, das heißt von etwa gleichen Abmessungen in drei Haupterstreckungsrichtungen. Die Titankerne 2 können aus chemisch reinem Titan bestehen. Technisches Titan Grade 3 ist aber ausreichend.

Durch Zugabe von Säure 3 werden die Titankerne 2 angeätzt 4, um Kernoberflächen der Titankerne 2 insbesondere von Ölen und Fetten zu reinigen und von Passivierungsschichten aus Titanoxid zu befreien. Konkret kann das Titanpulver 1 für eine Stunde bei Raumtemperatur in einer 3 M HCl-Lösung suspendiert werden. Dieser Prozess kann durch Erhöhen der Temperatur der Lösung bis zu ihrem Siedepunkt beschleunigt werden. Anschließend werden die Titankerne 2 in einen Ofen mit erzwungener Konvektion bei beispielsweise 95°C getrocknet.

Dann werden die getrockneten Titankerne 2 mit einer Salzlösung 6 benetzt 7. Die Salzlösung 6 enthält Rutheniumsalz und Iridiumsalz. Konkret kann die Salzlösung 6 Isopropanol als Lösungsmittel und RuCl₃ * x H₂O und IrCl₃ * x H₂O als Salze enthalten, und zwar in einer Menge und einem Verhältnis, welche gewünschten Edelmetalloxidbeschichtungen auf den Titankernen 2 entsprechen. Dann erfolgt ein Trocknen 8 der benetzten Titankerne 2 bei beispielsweise 85°C wieder in einem Ofen mit erzwungener Konvektion, was zur Vermeidung von Explosionsgefahren erforderlich ist, bis die Titankerne vollständig trocken sind. Auch die vollständige Trocknung ist eine Maßnahme zur Vermeidung von Explosionsgefahren. An das Trocknen 8 schließt sich ein Kalzinieren 9 an, bei dem das Kristallwasser xH₂O thermisch aus den Salzen ausgetrieben wird. Die Schritte 7 bis 9 werden wiederholt, bis die gesamte Salzlösung 6 aufgebraucht ist, die so bemessen ist, dass die Edelmetalloxidbeschichtungen auf den Titankernen 2 eine gewünschte Oberflächendichte aufweisen. Als für viele Anwendungen geeignete Oberflächendichte der Edelmetalloxidbeschichtungen auf den Titankernen hat sich der vergleichsweise niedrige Wert von 10 g/m² erwiesen.

Bei einem nachfolgenden Glühen 10 werden die derart mit dem Anhydrid der Salze beschichteten Titankerne bei beispielsweise 550°C für zwei Stunden in Anwesenheit von Sauerstoff geglüht. Dadurch werden die gesamten Salze pyrolytisch in Rutheniumoxid (RuO₂) und Iridiumoxid (IrO₂) umgewandelt und diese Edelmetalloxide in die Kernoberflächen der Titankerne 2 eingebrannt. Dadurch werden Mischmetalloxidpartikel 11 erhalten.

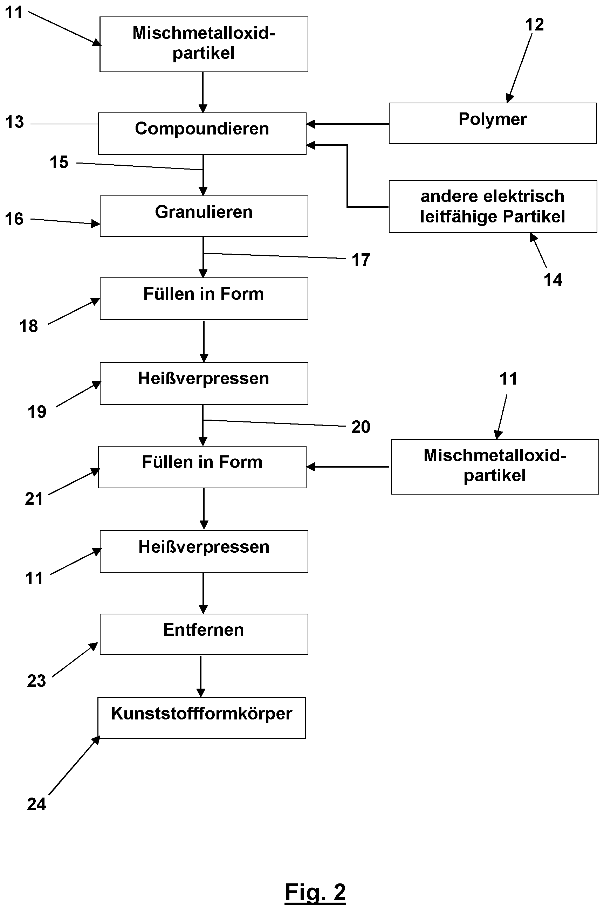

Gemäß **Fig. 2** können die Mischmetalloxidpartikel 11 zusammen mit einem säurebeständigen Polymer 12 oder entsprechenden Vorläufern compoundiert 13 werden. Zusätzlich oder insbesondere alternativ können dem Polymer 12 beim Compoundieren 13 andere elektrisch leitfähige Partikel 14 zugesetzt werden. Das Compoundieren 13 kann in an sich bekannter Weise in einen Doppelschneckenextruder erfolgen. Alternativ oder zusätzlich können das Polymer 12 und die anderen elektrisch leitfähigen Partikel 14 kryogen und/oder hochenergetisch vermahlen werden, gegebenenfalls, um sie anschließend homogen mit den Mischmetalloxidpartikeln 11 zu vermengen. Das resultierende Compound 15 kann granuliert 16 werden. Statt des daraus resultierenden Granulats 17 kann das Compound 15 direkt in Pulverform in eine Form gefüllt 18 werden. Bei einem ersten Heißverpressen 19 werden die Ausgangsmaterialien in der Form unter Verdrängen enthaltener Luft kompaktiert und dauerhaft miteinander verbunden. Bei dem ersten Heißverpressen 19 von Compounds 15 oder Granulaten 17 auf Basis eines thermoplastischen Polymers werden die Polymeranteile unter Einbettung der elektrisch leitfähigen Partikel 11, 14 in eine entstehende zusammenhängende Kunststoffmatrix miteinander verschmolzen. Bei einem duroplastischen Polymer kommt eine teilweise chemische Vernetzung der Polymeranteile in der Kunststoffmatrix hinzu. Nach dem ersten Heißverpressen 19 liegt in der Form ein Vorformling 20 vor.

Bei einem weiteren in die Form Füllen 21 wird eine Monolage der Mischmetalloxidpartikeln 11 auf mindestens eine Matrixoberfläche der Kunststoffmatrix des Vorformlings 20 aufgebracht. Bei einem zweiten Heißverpressen 22 werden die Mischmetalloxidpartikeln 11 an der mindestens einen Matrixoberfläche in die Kunststoffmatrix eingepresst und dabei so teilweise in die Kunststoffmatrix eingebettet, dass sie dort dauerhaft fixiert und elektrisch an die elektrisch leitfähigen Partikel 11, 14 in der Kunststoffmatrix angebunden sind, aber auch teilweise an der mindestens einen Matrixoberfläche freiliegen. Bei dem zweiten Heißverpressen 22 wird ein thermoplastisches Polymer 12 an der jeweiligen Matrixoberfläche zumindest angeschmolzen und ein duroplastisches Polymer wird ebenfalls thermisch aufgeweicht, bis es dann vollständig chemisch vernetzt wird. Ein anschließendes Entformen 23 aus der Form ergibt einen Formkörper 24, der als Elektrode, konkret als sogenannte Mischmetalloxidelektrode bzw. dimensionsstabile Anode (DAS) einsetzbar ist.

Die durch das Verfahren gemäß den Figuren 1 und 2 erhaltenen Formkörper 24 können beispielsweise durch Entgraten oder Berändern nachbearbeitet werden, sind aber grundsätzlich direkt als die gewünschten Mischmetalloxidelektroden beziehungsweise dimensionsstabilen Anoden einsetzbar.

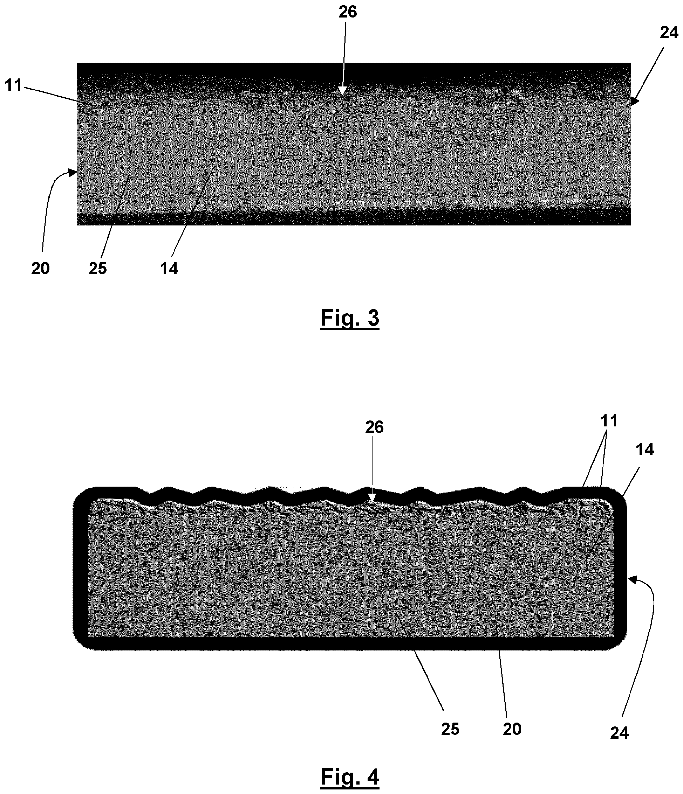

**Fig. 3** ist ein Schnitt durch den Formkörper 24, wie er durch das Verfahren gemäß den Figuren 1 und 2 erhältlich ist. Er weist eine Kunststoffmatrix 25, die in die Kunststoffmatrix 25 eingebetteten anderen elektrisch leitfähigen Partikel 14 und die Monolage 26 der hier an deren oberen Matrixoberfläche teilweise in die Kunststoffmatrix 25 eingebetteten Mischmetalloxidpartikel 11 auf. Dabei sind in Figur 3 weder die anderen elektrisch leitfähigen Partikel 14 im Volumen der Kunststoffmatrix, noch die Mischmetalloxidpartikel 11 an der oberen Matrixoberfläche optisch aufgelöst. Konkret ist Figur 3 eine Fotografie eines Schnitts durch einen Formkörper 24 mit einer Kunststoffmatrix 25 aus Polyvinylidenfluorid, die durch einen Zuschlag von 80 Gewichtsprozent Graphit elektrisch leitfähig gemacht wurde und auf die eine Monolage 26 aus RuOz-beschichteten kleinen Titankernen aufgepresst wurde.

Grundsätzlich kann der Formkörper 24 auch eine über seine gesamte Dicke homogene Zusammensetzung mit über seine gesamte Dicke gleichmäßig verteilt angeordneten Mischmetalloxidpartikel 11 aufweisen. Von diesen liegt dann jedoch nur ein kleiner Teil an den Matrixoberflächen der Kunststoffmatrix teilweise frei und kann damit bei Verwendung des Formkörpers 24 als Elektrode elektrokatalytisch wirksam werden.

Die Zeichnung des Schnitts durch den Formkörper 24 gemäß **Fig. 4** zeigt die Mischmetalloxidpartikel 11 der Monolage 26, die an deren hier oberen Matrixoberfläche teilweise in die Kunststoffmatrix 25 eingebettet sind.

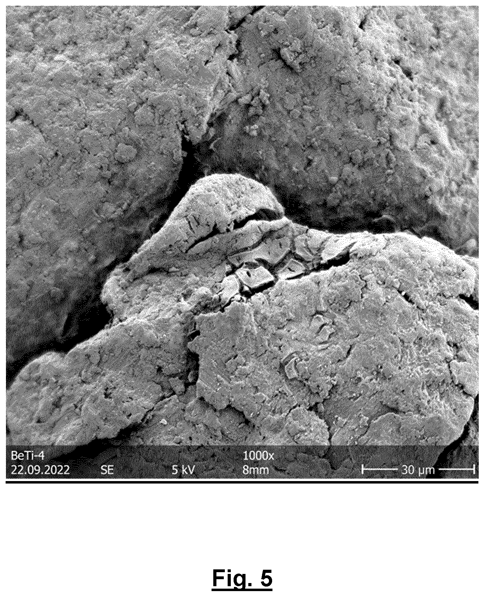

**Fig. 5** ist eine REM-Aufnahme von beschichtetem Titanpulver. Es sind Ablagerungen von Rutheniumoxid und Iridiumoxid sichtbar, die in der Literatur als schlammartige Strukturen beschrieben werden. Somit wurden die bekannten Merkmale von MMO-beschichtetem Titan, insbesondere von mit Ruthenium- und Iridiumoxiden beschichtetem Titan, in Form von schlammartigen Rissen auf der Oberfläche der Elektrode erkannt.

In der folgenden Tabelle sind die Ergebnisse von Messungen des elektrischen Widerstands an jeweils drei verschiedenen Stellen von mehreren Ausführungsbeispielen der erfindungsgemäßen Elektrode und von Vergleichsbeispielen aufgeführt.

| **Elektrischer Widerstand von Verbundelektroden (in ohm)** | | | | | | |
|---|---|---|---|---|---|---|
| | Widerstand (1) | Widerstand (2) | Widerstand (3) | | | |
| Beispiel 1 (3.14 cm2) | 1.68E-02 | 1.60E-02 | 1.02E-02 | | | |
| Beispiel 2 (3.14 cm2) | 1.46E-02 | 9.77E-03 | 2.00E-02 | | | |
| Beispiel 3 (25 cm2) | 2.27E-02 | 1.92E-02 | 2.14E-02 | | | |
| Beispiel 4 (25 cm2) | 1.31E-02 | 1.79E-02 | 2.21E-02 | | | |
| Beispiel 5 | 7.87E-03 | 1.36E-02 | 6.11E-02 | | | |
| Beispiel 6 | 5.31E-03 | 8.39E-03 | 6.94E-03 | | | |
| | | | | | | |
| | | | | | | |
| Vergleichsbeispiel 1 | 1.40E-04 | 1.45E-04 | 1.93E-04 | | | |
| Vergleichsbeispiel 2 | 5.96E-02 | 6.68E-02 | 6.19E-02 | | | |
| Vergleichsbeispiel 3 | 7.58E-04 | 4.46E-04 | 6.79E-04 | | | |

Die Elektroden der Beispiele 1 bis 4 entsprechen Figur 3, d. h., es handelt sich jeweils um Elektroden mit einem Formkörper 24, der eine Kunststoffmatrix 25 aus Polyvinylidenfluorid aufweist, welche durch einen Zuschlag von 80 Gewichtsprozent Graphit elektrisch leitfähig gemacht wurde und auf welche eine Monolage 26 aus RuOz-beschichteten kleinen Titankernen aufgepresst wurde. Es wurden zwei Elektrodengrößen hergestellt, 3,14 cm² und 25 cm². Die Mischmetalloxidpartikel 11 wurden auf die Oberfläche des Vorformlings 20 aufgestreut und heiß in die Matrixoberfläche der Kunststoffmatrix 25 eingepresst (siehe Abbildung vor der Tabelle).

Die Elektroden der Beispiele 5 und 6 bestehen aus PVDF als Polymer 12 und kleinen Titankernen, die mit einer 60:40 Mischung von RuO₂:IrO₂ (bezogen auf das Gewicht) beschichtet wurden, als Mischmetalloxidpartikel 11. Weitere Bestandteile hatten diese Elektroden nicht. Mit dem Verhältnis von RuO₂ zu IrO₂ werden besonders gut technisch brauchbare Elektroden erhalten.

Die Elektrode des Vergleichsbeispiels 1 besteht aus platiniertem Titanstreckmetall. Die Elektrode des Vergleichsbeispiels 2 entspricht dem Vorformling 20, aus der Herstellung der Elektroden der Beispiele 1 bis 4. Die Elektrode des Vergleichsbeispiels 2 besteht also aus Polyvinylidenfluorid mit einem Zuschlag von 80 Gewichtsprozent Graphit. Die Elektrode des Vergleichsbeispiels 3 ist eine kommerzielle DSA in Form eines Streckmetalls mit Mischmetalloxidbeschichtung, wie sie in der Industrie verwendet wird.

Die Messungen zeigen, dass die elektrischen Widerstände der erfindungsgemäßen, mit kleinen beschichteten Titankernen hergestellten Elektroden gering sind. Wegen der Polymermatrix und dem darin enthaltenen Kohlenstoff sind die elektrischen Widerstände zwar höher als bei reinen Metallplatten; das gilt aber für alle mit einem eine Kunststoffmatrix aufweisenden Formkörper hergestellten Elektroden. Die Elektroden der Beispiele 1 bis 6 mit kleinen beschichteten Titankernen zeigen ähnliche Leitfähigkeiten wie die Compound-Elektrode des Vergleichsbeispiels 2. Bei Verwendung von kleinen beschichteten Titankernen im Volumen der Kunststoffmatrix (Beispiele 5 und 6) ist die Leitfähigkeit sogar besser als beim Vergleichsbeispiel 2. Dies zeigt, dass die pyrolytisch beschichteten kleinen Titankerne eine gute elektrische Leitfähigkeit aufweisen.

Weiterhin wurden die elektrochemischen Leistungen der erfindungsgemäßen Elektroden mit handelsüblichen DSAs verglichen. Alle Experimente wurden entweder in einer 1 M Na₂SO₄-Lösung in einer ungetrennten elektrochemischen Durchflusszelle gegen eine Platin-Netz-Gegenelektrode gegen eine Ag/AgCl 3M KCI Referenzelektrode oder in einer elektrochemischen Durchflusszelle, die durch eine Kationenaustauschmembran getrennt war, durchgeführt. Der Anolyt war jeweils eine 1M KOH-Lösung und der Katholyt jeweils eine 1 M Na₂SO₄-Lösung.

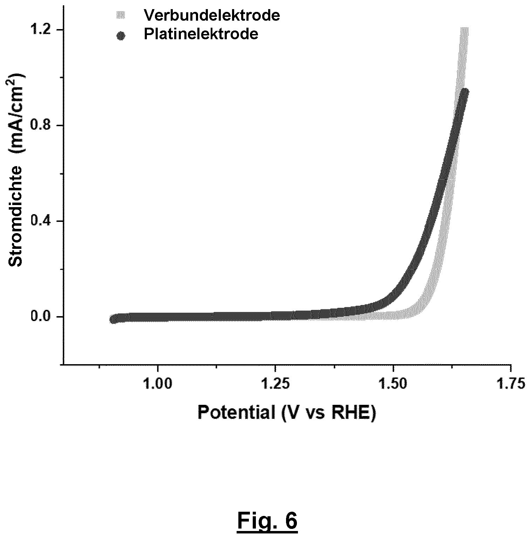

**Fig. 6** vergleicht eine LSV (Lineare Sweep Voltammetrie) der erfindungsgemäßen Elektrode gemäß dem obigen Beispiel 2 mit derjenigen der titangetragenen Platinelektrode gemäß dem obigen Vergleichsbeispiel 1. Die Messungen wurden in einer elektrochemischen Durchflusszelle mit einer Elektrodenfläche von 3,14 cm² gegen ein Platinnetz als Gegenelektrode durchgeführt; als Elektrolyt wurde 1 M KOH verwendet.

Die erfindungsgemäße Elektrode schneidet mit einer Überspannung im Bereich von 250 mV bis 300 mV, wobei die Kurve im Bereich höherer Stromdichten ein eher lineares Verhalten zeigte, im Vergleich zu der Platinelektrode gut ab. Dass das Spitzenpotenzial bei der Platinelektrode höher war, war dies aufgrund der Katalysatorbeladung und der Eigenschaften der Elektroden zu erwarten.

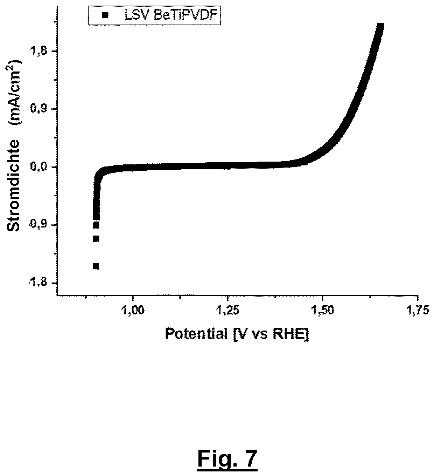

**Fig. 7** zeigt eine lineare Voltammetrie der erfindungsgemäßen Elektrode gemäß dem obigen Beispiel 5 in 1M KOH (Anolyt) und 1M Na₂SO₄ Katholyt) in einer ungetrennten elektrochemischen Durchflusszelle gegen eine Platin-Netz-Gegenelektrode gegen eine Ag/AgCl 3M KCI Referenzelektrode. Der Verlauf der LSV-Kurve ähnelt stark demjenigen der Kurve in Fig. 6 zu der erfindungsgemäßen Elektrode gemäß dem obigen Beispiel 2.

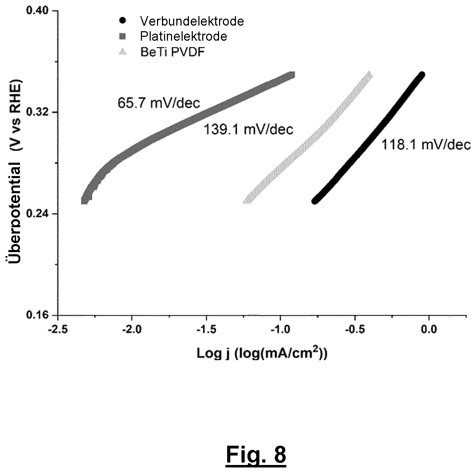

**Fig. 8** vergleicht Tafelsteigungen erfindungsgemäßer Elektroden mit derjenigen einer Platinelektrode. Die "Verbundelektrode" entspricht den obigen Beispielen 1 bis 4. BeTi PVDF war die Elektrode des obigen Beispiels 5. Die Platinelektrode war ein platiniertes Titanstreckmetall wie in dem obigen Vergleichsbeispiel 1.

Die Platinelektrode weist ein sehr starkes lineares Verhalten mit einer Tafelsteigung von 65,7 mV pro Dekade auf, während die erfindungsgemäße Verbundelektrode eine Tafelsteigung von 118,1 mV pro Dekade aufweist. Dieser Wert bleibt unter der oberen Grenze des empfohlenen Bereichs für diese Art von Elektroden, der zwischen 60 und 120 mV pro Dekade liegt. Dies zeigt, dass sich die erfindungsgemäße Verbundelektrode für die beabsichtigten Anwendungen als Alternative eignet. Die erfindungsgemäße Elektrode BeTi PVDF weist wegen der geringeren Verfügbarkeit der Mischmetalloxidpartikel an ihrer Oberfläche eine für diese Art von Elektroden etwas zu hohe Tafelsteigung von 139,1 mV pro Dekade auf, ist aber für andere Anwendungen geeignet.

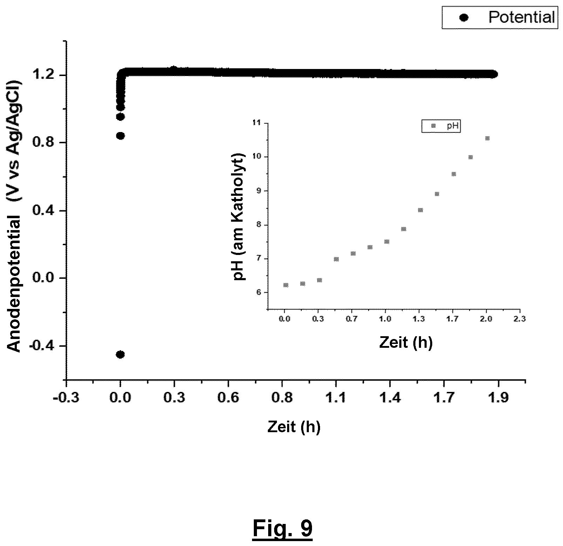

**Fig. 9** illustriert eine Simulation eines Abwasserbehandlungsverfahrens als Beispiel für eine Anwendung einer erfindungsgemäßen Elektrode. Im großen Diagramm ist das Potentialverhalten der erfindungsgemäßen Elektrode und im kleineren Diagramm die Entwicklung des pH-Wertes im Katholyten während des Behandlungsprozesses dargestellt. Verwendet wurde die Elektrode BeTi PVDF gemäß dem obigen Beispiel 5 mit 25 cm² Elektrodenoberfläche in einer elektrochemischen Durchflusszelle, die durch eine Kationenaustauschmembran (Nafion) getrennt war. Der Anolyt war eine 1M KOH-Lösung und der Katholyt eine 1 M Na₂SO₄-Lösung. Diese Elektrolytlösungen wurden gewählt, weil sie den realen Elektrolytlösungen mit ihren pH-Werten in einem Abwasserbehandlungsverfahren, bei dem Schwermetalle elektrochemisch als Hydroxide an der Kathode abgeschieden werden, nahe kommen.

Die in dem kleineren Diagramm dargestellte pH-Änderung am Katholyten, die während der Elektrolyse eintritt, fördert die Ausfällung von Schwermetallen aus der Lösung an der Kathode. Gezeigt ist der Potenzialverlauf an der Anode für eine konstante Stromdichte von 12,5 mA/cm², was zeigt, dass die als Anode verwendete erfindungsgemäße Elektrode ordnungsgemäß und mit einem stabilen Potenzialverlauf arbeitet, was für industrielle Anwendungen wesentlich ist. Es ist zu erwarten, dass eine erfindungsgemäße Elektrode in einem Stromdichtebereich von 0,1 mA/cm² bis hinauf zu 100 mA/cm² arbeiten kann.

### BEZUGSZEICHENLISTE

- 1: Titanpulver
- 2: Titankerne
- 3: Säure
- 4: Anätzen
- 5: Trocknen
- 6: Salzlösung
- 7: Benetzen
- 8: Trocknen
- 9: Kalzinieren
- 10: Glühen
- 11: Mischmetalloxidpartikel
- 12: Polymer
- 13: Compoundieren
- 14: elektrisch leitfähige Partikel
- 15: Coumpound
- 16: Granulieren
- 17: Granulat
- 18: Füllen in Form
- 19: Heißverpressen
- 20: Vorformling
- 21: zweites Füllen in Form Entformen
- 22: zweites Heißverpressen
- 23: Entformen
- 24: Formkörper
- 25: Kunststoffmatrix
- 26: Monolage

## Patentansprüche

1. Elektrode
- mit einem Formkörper (24), der eine durch elektrisch leitfähige Zuschläge elektrisch leitfähig gemachte Kunststoffmatrix (25) und zumindest an einer Matrixoberfläche der Kunststoffmatrix (25) in die Kunststoffmatrix (25) eingebettete und teilweise freiliegende Mischmetalloxidpartikel (11) aufweist,
- wobei die Mischmetalloxidpartikel (11) jeweils einen Titankern (2) mit einer Kernoberfläche und eine Edelmetalloxidbeschichtung auf der Kernoberfläche des Titankerns (2) aufweisen,
- wobei die Titankerne (2) der Mischmetalloxidpartikel (11) Teilchengrößen im Bereich von 1 µm bis 2500 µm aufweisen,
**dadurch gekennzeichnet, dass** die Edelmetalloxidbeschichtungen in die Kernoberflächen der Titankerne (2) eingebrannt und elektrisch leitend an die Titankerne (2) angebunden sind.

2. Elektrode nach Anspruch 1, **wobei** die Kernoberflächen der Titankerne (2) von Passivierungsschichten aus Titanoxid frei sind, vorzugsweise angeätzt sind.

3. Elektrode nach einem der voranstehenden Ansprüche, **wobei** die Edelmetalloxidbeschichtungen bezogen auf ihr Gewicht zu mindestens 90 % und vorzugsweise zu mindestens 96 % aus Rutheniumoxid und Iridiumoxid bestehen und/oder Rutheniumoxid und Iridiumoxid in einem Verhältnis von 10:90 bis 90:10 und vorzugsweise in einem Verhältnis von 55:45 bis 65:35 aufweisen.

4. Elektrode nach einem der voranstehenden Ansprüche, **wobei** die Edelmetalloxidbeschichtungen eine Oberflächendichte von 1 g/m² bis 150 g/m² und vorzugsweise von 5 g/m² bis 20 g/m² aufweisen.

5. Elektrode nach einem der voranstehenden Ansprüche, **wobei** die Edelmetalloxidbeschichtungen die Kernoberflächen der Titankerne (2) vollständig bedecken.

6. Elektrode nach einem der voranstehenden Ansprüche, **wobei** die Titankerne (2) aus Titan Grade 1, 2 oder 3 bestehen.

7. Elektrode nach einem der voranstehenden Ansprüche, **wobei** die Titankerne (2) der Mischmetalloxidpartikel (11) eine mittlere Teilchengröße im Bereich von 300 µm bis 500 µm aufweisen, wobei eine Teilchengrößenverteilung der Titankerne (2) vorzugsweise nicht breiter als 300 µm ist.

8. Elektrode nach einem der voranstehenden Ansprüche, **wobei** die Kunststoffmatrix (25) aus einem säurebeständigen Polymer besteht, das aus Polypropylen (PP), Polyvinylidenfluorid (PVDF), Polyphenylensulfid (PPS), Polysulfon (PSU), Polyfluoralkoxy-Polymeren (PFA), Polyetheretherketon (PEEK), Polyarylenether (PAE) und Polytetrafluorethylen (PTFE) ausgewählt ist, wobei die Kunststoffmatrix (25) vorzugsweise aus Polysulfon (PSU) oder Polyetheretherketon (PEEK) oder Polytetrafluorethylen (PTFE) besteht.

9. Elektrode nach einem der voranstehenden Ansprüche, **wobei** der Formkörper (24) ein flächiger Körper mit zwei Haupterstreckungsrichtungen und zwei Hauptseiten ist, wobei eine Monolage der Mischmetalloxidpartikel (11) lokal an einer oder beiden Hauptseiten in die Matrixoberfläche der Kunststoffmatrix (25) eingebettet ist und teilweise an der Matrixoberfläche freiliegt.

10. Elektrode nach einem der voranstehenden Ansprüche, **wobei** in die Kunststoffmatrix (25) weitere elektrisch leitfähige Zuschläge aufweist, wobei die weiteren elektrisch leitfähigen Zuschläge vorzugsweise aus Rußpartikeln, Graphitpartikeln, Kohlenstoffnanoröhrchen, Kohlenstofffasern, Metallpartikeln und Metallfasern ausgewählt sind.

11. Verfahren zur Herstellung einer Elektrode nach einem der voranstehenden Ansprüche, wobei
- Titankerne (2) mit Teilchengrößen im Bereich von 1 µm bis 2500 µm mit einer Salzlösung (6) benetzt werden, die Rutheniumsalz und/oder Iridiumsalz enthält,
- die benetzten Titankerne (2) getrocknet werden,
- das Rutheniumsalz und/oder Iridiumsalz der getrockneten Titankerne (2) thermisch zersetzt wird und in Anwesenheit von Sauerstoff Rutheniumoxid und/oder Iridiumoxid gebildet wird, so dass mit Edelmetalloxidbeschichtungen beschichtete Mischmetalloxidpartikel (11) erhalten werden,
- ein Formkörper (24) mit einer durch elektrisch leitfähige Zuschläge elektrisch leitfähig gemachten Kunststoffmatrix (25) aus einem säurebeständigen Polymer geformt wird, wobei die Mischmetalloxidpartikel (11) zumindest in eine Matrixoberfläche der Kunststoffmatrix (25) so eingebettet werden, dass sie an der Matrixoberfläche der Kunststoffmatrix (25) teilweise freiliegen.

12. Verfahren nach Anspruch 11, **wobei** die Titankerne (2) vor dem Benetzen mit der Salzlösung (6) angeätzt werden, vorzugsweise mit einer mindestens 2 M HCl-Lösung bei mindestens Raumtemperatur, wobei die angeätzten Titankerne (2) vor dem Benetzen mit der Salzlösung (6) bei erhöhter Temperatur getrocknet werden, vorzugsweise bei 90°C bis 110°C.

13. Verfahren nach einem der Ansprüche 11 und 12, **wobei** die Salzlösung (6), mit der die Titankerne (2) benetzt werden, in Alkohol aufgelöste Salzhydrate, vorzugsweise in Isopropanol aufgelöste Chloridhydrate aufweist.

14. Verfahren nach einem der Ansprüche 11 bis 13, **wobei**
- die benetzten Titankerne (2) bei 80 °C bis 90 °C getrocknet werden und/oder
- die getrockneten Titankerne (2) auf 420 °C bis 480 °C erhitzt werden, um die Salzhydrate thermisch zu zersetzen, und die getrockneten Titankerne (2) anschließend bei 520 °C bis 580 °C geglüht werden, das Ruthenium und Iridium aus den Salzhydraten in Rutheniumoxid und Iridiumoxid umzuwandeln.

15. Verfahren nach einem der Ansprüche 11 bis 13,
- **wobei** eine Vorform des Formkörper (24) mit der Kunststoffmatrix (25) aus dem säurebeständigen Polymer und mit in die Kunststoffmatrix (25) eingebetteten elektrisch leitfähigen Zuschlägen geformt wird,
- **wobei** die Mischmetalloxidpartikel (11) auf die zumindest eine Matrixoberfläche der Kunststoffmatrix (25) aufgebracht werden und
- **wobei** eine Monolage der Mischmetalloxidpartikel (11) unter Anwendung von erhöhtem Druck und erhöhter Temperatur so in die zumindest eine Matrixoberfläche der Kunststoffmatrix (25) eingebettet wird, dass sie an der Matrixoberfläche teilweise freiliegt.
